# EUROPEAN PATENT SPECIFICATION

(11) **EP 1 957 259 B1**
(45) Date of publication and mention of the grant of the patent: **07.04.2010**
(21) Application number: 06835634.4
(22) Date of filing: 21.11.2006
(51) Int. Cl.: B29C 70/46, B29C 51/00, B29K 23/00, B29K 105/06

(54) **METHOD FOR FORMING A THERMOPLASTIC COMPOSITE**
VERFAHREN ZUR HERSTELLUNG EINES THERMOPLASTISCHEN VERBUNDSTOFFS
PROCEDE DE FABRICATION D UN COMPOSITE THERMOPLASTIQUE

(30) Priority: 21.11.2005 EP 05077636
(43) Date of publication of application: 20.08.2008
(73) Proprietor: Lankhorst Pure Composites B.V., 8607 AD Sneek (NL)
(72) Inventor: JACOBS, Johannes, Antonius, Joseph, NL-8447 EB Heerenveen (NL); BLOEMHOF, Fokke, NL-8521 DH Sint Nicolaasga (NL)
(74) Representative: Hatzmann, Martin
(86) International application number: PCT/NL2006/000586
(87) International publication number: WO 2007/058530

(56) References cited:
- EP-A- 0 630 735
- EP-A- 0 630 736
- WO-A-00/48824
- WO-A-03/008190
- DE-A1- 4 104 692
- US-A- 5 573 824
- PEIJS T: "COMPOSITES FOR RECYCLABILITY" MATERIALS TODAY, ELSEVIER SCIENCE, KIDLINGTON, GB, vol. 6, no. 4, April 2003 (2003-04), pages 30-35, XP008048401 ISSN: 1369-7021

## Description

The present invention is directed to a method for forming a thermoplastic composite according to claim 1, wherein the thermoplastic composite comprises a matrix and a reinforcement, both issued of a semi-crystalline polymer, which are preferably of the same class.

In order to compete in engineering and high-performance applications with metals, polymers have to be upgraded with reinforcing fillers like talc or fibers. Glass fibers are generally used to improve the mechanical performance of polymers. However, glass fiber materials have the disadvantage that they make it very difficult to recycle the materials in which they are incorporated.

Thermoplastic composites that are reinforced with glass or carbon fibers are generally thermoformed in a non-isothermal process, because the time to heat and cool the thermoplastic matrix has been identified as the main limitation for rapid manufacturing of these composites. The thermoplastic composite is heated above the melting point of the semi-crystalline matrix and then shaped and cooled in a cold mould.

Recently, thermoplastic composites have been developed where both the matrix and the reinforcement are issued from a semi-crystalline polymer of the same class. So far, these materials have been thermoformed in a non-isothermal process, similar to the traditional composites.

Prosser et al. (Plast., Rubber Compos. 2000, 29(8), 401-410) describe an isothermal stamping process for thermoforming hot compacted polypropylene sheets. The process can be divided into a region where thermoforming commences, a region where the sheet is forced into the mould and a cooling phase in which the deformed sheet is cooled while under pressure.

Cabrera (Recyclable all-polypropylene composites: Concept, properties and manufacturing, PhD thesis, Eindhoven Technical University, 2004) describes a non-isothermal stamping process for deforming polypropylene fiber reinforced polypropylene, in which samples are preheated to 150 or 160°C before being transferred to a 40°C mould.

EP-A-0 630 736 discloses a method for thermoforming self-reinforced thermoplastic composites.

It is an object of the present invention to provide a method for thermoforming a self-reinforced thermoplastic composite which is more efficient than the above-mentioned methods.

It has been found that this object may be achieved by choosing a suitable mould temperature, which enables leaving out the conventional cooling step. Thus, in a first aspect the present invention is directed to a method for forming a thermoplastic composite, which composite comprises a matrix and a reinforcement, both issued of a semi-crystalline polymer, of the same class according to claim 1.

After the mould is opened, the thermoformed product can be removed from the mould. The removal of the product can be done manually but this may also be automated. Surprisingly, because of the specific composition of the starting material, the thermoformed product has in most cases (in particular when the products are not too large) a stiffness that allows for direct removal from the mold, without requiring extra cooling, other than the cooling to ambient, which occurs automatically when the mould is opened. Nevertheless, active cooling of the product may be carried out, but this is not preferred. Active cooling can be done by cooling the product directly (*e.g*. using air or water) or by cooling the product via the mould, *e.g*. by cooling the mould using water.

As used herein, the term "composite material" generally refers to an arrangement of long or discontinuous reinforcements of a high performance material embedded in a matrix with lower mechanical resistance. The reinforcements and the matrix consist of physically distinct and separable materials. As such, polymer matrix composite materials are usually reinforced with glass or carbon fibers.

The thermoplastic composite of the invention is a material where both the matrix and the reinforcement are preferably issued from the same class of semi-crystalline polymer, that is to say, the matrix and the reinforcement each comprise the same class of semi-crystalline polymer. Highly oriented semi-crystalline polymer molecules can serve as reinforcement for a non-oriented matrix of the same class of semi-crystalline polymer. The result is a single type 'self-reinforced' material with an interesting combination of properties including light weight, good mechanical properties, excellent impact strength, and recyclability. Typically, the reinforcements account for more than 70 vol.% of the composite, more preferably for more than 80 vol.% of the composite.

A very suitable "self-reinforced" material is a material wherein the melting point of the matrix, generally indicated by the DSC melting point as defined in ISO 11357-3, is lower than the melting point of the reinforcements. This difference in melting points allows a heat treatment above the melting point of the matrix that does not affect the mechanical properties of the reinforcements.

It is also possible to use a self-reinforced material in accordance with the present invention that is based on elements such as tapes, films or yarns made of a single material (*e.g*. PP or PE), having the same DSC melting point. From these elements woven or non-woven sheets are produced, which is subsequently reinforced by heating at a very carefully controlled temperature. The temperature is controlled such that only a very limited portion of the outside of the element softens. Thus a sheet of a single material is obtained. The matrix in such materials is formed by the contacting points of the elements and the reinforcement by the core of the elements.

The inventors surprisingly found that it is possible to (isothermally) thermoform a thermoplastic composite, which composite comprises a matrix and a reinforcement, both issued of a semi-crystalline polymer of the same class. In the context of the present invention "isothermally" means that the temperature of the mould need not actively be changed when the mold is closed. By choosing the correct mould temperature, the cooling phase of the thermoforming processes in the prior art can be left out. The method of the invention reduces possible stress in the resulting thermoformed article. Also, the required thermoforming equipment is much less complex.

In accordance with the present invention, the mould temperature is set at a temperature between the sealing point of the matrix and the melting point of the reinforcement. Preferably the mould temperature is between the melting point of the matrix and the melting point of the reinforcement, the sealing point of a material being always at a lower temperature than the melting point.

According to the method of the invention, in a first step a stack (*e.g*. one or more sheets, films, tapes or yarns) of self-reinforced thermoplastic composite is placed in a mould. The thermoplastic composite has a temperature below the melting point of the matrix (*e.g*. below 130 °C, for instance at around room temperature), while the mould, at least when it is closed, and optionally also already before it is closed, has a temperature above the sealing point of said matrix (*e.g*. above 100 °C), but below the melting point of the reinforcement. (*e.g*. below 160 °C).

In one embodiment a stack of the material is used instead of consolidated sheets. By using a stack the mould can be closed while the material has not reached the transformation temperature yet. After the mould is closed, and optionally also before that, the mould temperature is allowed to arrive at a temperature above the sealing point of the matrix material and below the melting temperature of the reinforcement. Preferably the mould temperature is at most 5 °C above the melting point of the matrix material. In another preferred embodiment the mould temperature is set to the proper value already before it is closed.

It is also possible to use pre-produced plates or sheets, which have been formed previously from multiple layers of fabric materials as stacks in the present invention.

In the second step, the mould is closed and a pressure is applied. This pressure is preferably higher than 1 bar (*viz*. relative to the atmospheric pressure), more preferably between 2 and 20 bars, for instance around 5-15 barg, *e.g*. *ca*. 10 bars. Depending on the applied polymer, a high pressure can be required to stabilize the oriented molecules and to prevent excessive shrinkage when the pressure is released. The temperature of the mould is not actively changed (*viz*. the mould needs not to be cooled or heated) during the second step, thereby making the process in principal isothermal.

Different moulds can be used. Preferably, double-sided moulds are used and more preferably heated matched die metal moulds are used. However, other materials such as ceramics, polymer or composite materials can also be used for the manufacturing of these moulds. The so-called rubber stamping technique, in which one part of the mould (*e.g*. the female or the male) is a rigid mould comprising one the above-mentioned materials and the other is a silicon rubber plug can also be used. In a preferred embodiment, when a two-part mould is used, the female part of the mould is on top and the male part is below. Single-sided moulds, in which the material is forced into the mould by pressure (*e.g*. of air) and/or vacuum can also be used. In that particular case, the material can be placed between two membranes according to the technique known as diaphragm forming.

The thermoforming process of the present invention may suitably be carried out using electromagnetic fields in the heating step, which magnetic fields are applied to an intermediate element, which by result rises in temperature. This embodiment can be carried out for instance using the apparatus and methods described in WO-A-2005/094127.

In a third step, the mould is opened after a dwell time. This dwell time can vary between 10 seconds to 4 hours, preferably between 1 minute to 2 hours, and more preferably between 5 minutes to 1 hour. For molecules that need stabilization, a long dwell time is preferred. This also prevents excessive shrinkage when the pressure is released. However, if the oriented molecules do not need stabilization the dwell time can be short.

Oriented polyolefin materials can partly or completely lose their molecular orientation when subjected to free annealing (no constrain) at high temperatures below their melting point. This phenomenon leads to a macroscopic shrinkage and a loss of mechanical properties such as the tensile stiffness and strength. If the oriented phase shrinks at the temperature chosen for the mould, then it is necessary to prevent the shrinkage during pressing and stabilise the material. The compaction pressure, preferably between 2 and 20 bar, prevents shrinkage during the hot pressing step. If the shrinkage is very high, pressing pressures up to 500 bar may be necessary. The material then requires stabilisation so that, when the pressure is released, shrinkage is prevented or reduced. The stabilisation depends on the dwell time. For instance, the tape material used in Example 1 would shrink by 10 % and lose half of its tensile stiffness at room temperature when annealed at 145 °C for 10 min, without pressure. It was found that if the same material is kept under 25 bar pressure at 145 °C for at least 30 min and let cool to ambient after pressure release then more than 90 % of the tensile stiffness at room temperature is then retained.

In an optional fourth step the thermoplastic composite is cooled after opening the mould. The cooling step can be carried out for example in ambient or in a cold mould. The cooling may also be enhanced by using cooling water. Because, in self-reinforced polymeric materials, the matrix amount is limited to 30 vol.% and more preferably 20 vol.%, the hot thermoformed part is still in the solid-state and can be handled easily and let to cool in ambient without applied pressure. However, it is also possible to cool the part more quickly in a cold mould with or without pressure.

The semi-crystalline polymer can be a polyolefin, preferably polyethylene (*i.e*. a (co-)polymer mainly comprising ethylene monomeric units)or polypropylene (*i.e*. a (co-)polymer mainly comprising propylene monomeric units), polypropylene being most preferred. It can also be a copolymer of several types of α-olefin, for instance a copolymer of polyethylene with polypropylene. Other thermoplastic polymers that can be used in accordance with the present invention are thermoplastic polyesters, nylons (polyamides) and aramides.

The matrix and the reinforcement of the composite are preferably issued of a semi-crystalline polymer of the same class. The term "same class" means that both matrix and reinforcement are based on polymers comprising the same majority of monomeric units. For instance, in case a polypropylene reinforcement is used, the matrix of the same class will also be formed by a polypropylene and that if the reinforcement is a polyethylene, the matrix of the same class will be formed by a polyethylene.

In case of the use of polypropylene as the material for the composite, the material for the reinforcement will preferably be a homopolypropylene, preferably having a relatively high molecular weight, such as an average molecular weight of at least 250 000 and a melting temperature of at least 160 °C. It is to be noted that the reinforcement preferably consists of one material only, but that in case of recycle of production scrap, minor amounts of the material of the matrix may also be present in the reinforcement. This will generally not exceed 10 wt.%.

The material of the matrix in this embodiment is, as indicated above, also a polypropylene, preferably a copolymer of propylene with ethylene or another α-olefin. It is preferred to use a propylene ethylene copolymer, having an ethylene content of between 1 and 25 mol % and a propylene content of between 75 mol % and 99 mol %, as the material for the matrix, in particular if the central layer is a polypropylene. It is also possible to use blends of two of these materials.

In case of the use of polyethylene, basically the same considerations apply. As reinforcement an HDPE is preferably used, *i.e*. a polyethylene having a density of at least 950 kg/m³. The weight average molecular weight is preferably at least 250 000 and the melting point is 130 °C or higher. It is to be noted that the reinforcement preferably consists of one material only, but that in case of recycle of production scrap, minor amounts of the material of the matrix may also be present in the reinforcement. This will generally not exceed 10 wt.%.

The material of the matrix for this embodiment is preferably also a polyethylene, but now with a lower melting point, the difference being at least 10 °C. Suitable polyethylenes are random or block ethylene copolymers, LLDPE, LDPE, VLDPE and the like.

For both types of layer materials it is to be noted that they will generally contain conventional additives, including but not limited to dyes and pigments, flame retarders, UV-stabilisers, anti-oxidants, carbon black and the like.

In a preferred embodiment, the composite material is in the form of a cloth, tape or yarn, in part as-described in WO-A-03/008190. A very suitable example of such a material is the commercially available PURE® (Lankhorst-Indutech, Sneek, NL). More preferably the composite material is in the form of a tape. Such a composite tape can be prepared from co-extruded tapes. The resulting tapes consist of a highly oriented reinforcement (core) and a specially formulated matrix (skin) for welding the tapes together in a compaction process using a hot-press or continuous belt press. The tape can be woven into fabrics, which fabrics can be thermoformed directly. Alternatively sheets can be made from the fabric by sealing them together. These sheets then can be thermoformed in accordance with the present invention.

The present invention can be used to produce complex 3-dimensional parts. The invention is particularly suitable for producing large parts, such as boats (*e.g*. canoes), ski boxes, truck shields, car body parts, in particular car bottom plates. Another important characteristic of the parts produced in accordance with the present invention is that they can be produced stress-free or relatively stress free.

The invention may be applied with great advantage using a so called thermoform carrousel, in which a multitude of moulds is allowed to rotate, each being in a different phase of the production method of the present invention. Because the moulds used in the present invention can be relatively cheap (in comparison for instance with injection moulds), supplying a carousel of for instance ten moulds is economically still feasible while it increases the production correspondingly. This enables production of-particularly smaller sized-items, such as suitcases, motor helmets, body protective articles (*e.g*. shin-guards), *etc*., at a high production speed.

Cycle times of the method of less than 30 seconds can be achieved if the oriented molecules do not need stabilization. In addition, the thermoforming method can be used to produce single curvature parts or flat sheets.

The invention is now further elucidated by the following examples, which are not to be construed as limiting the invention.

### Example 1

Nine layers of fabric of PURE® material (Lankhorst-Indutech, Sneek, the Netherlands) were placed in a mould (truncated conical cup shape, T = 145 °C) for 5 minutes. The PURE® material is a co-extruded tape with ABA-structure, in which the core layer B is a polypropylene blend having a DSC melting point of 161 °C and the two layers A are a propylene copolymer having a DSC melting temperature of 135 °C; the weight ratio A-B-A is 6-88-6. The part was then removed and let cool in ambient. The obtained part did not show any large distortion and matched the mould geometry.

### Example 2

Nine layers of fabric of PURE® material described in the previous Example were placed in a hot press (T = 145 °C) in between two thin steel sheets (2 mm) as a flat mould for 30 minutes. The plate was removed and remained flat after cooling to ambient temperature.

### Example 3

Twelve layers of PURE® material were placed in a flat hot mould, as described in Example 2. The applied pressure was 30 barg. The applied temperature was 140 °C. Different dwell times and cooling conditions were investigated, as indicated in Table 1.

**Table 1. Thermoforming conditions for Example 3**

| **Exp.** | **Dwell time / min** | **Cooling before opening** | **Density / (kg/dm³)** | **E-modulus / (MPa)** | **Strength / (MPa)** |
|---|---|---|---|---|---|
| A | 2 | Yes*) | 0.801 | 5530 | 230 |
| B | 8 | No | 0.802 | 5447 | 222 |
| C | 12 | No | 0.809 | 5641 | 247 |

| | | | | | |
|---|---|---|---|---|---|
| *) using cooling water (approximately 18 °C) in the mould. | | | | | |

The density, stiffness (E-modulus) and strength of the resulting composite were measured and are given in Table 1.

## Claims

1. Method for thermoforming a thermoplastic composite, which composite comprises a matrix and a reinforcement, both issued of a semi-crystalline polymer of the same class, comprising the steps of:
i) placing a stack of said thermoplastic composite, having a temperature below the melting point of said matrix, in a mould having a temperature between the sealing or melting point of said matrix and the melting point of said reinforcement;
ii) closing said mould; and
iii) opening the mould after a dwell time;
wherein the temperature of said mould is between the sealing point of said matrix and the melting point of said reinforcement, at least for a period of time after step ii).

2. Method according to claim 1, wherein the temperature of said thermoplastic composite in step i) is below the sealing point of said matrix.

3. Method according to claim 1 or 2, wherein the temperature of said mould is between the melting point of said matrix and the melting point of said reinforcement.

4. Method according to any of the previous claims, wherein composite is selected from composites wherein the DSC melting point of the matrix is lower than the DSC melting point of the reinforcement; and composites wherein the DSC melting point of the matrix is the same as the DSC melting point of the reinforcement.

5. Method according to any of the previous claims, wherein said stack is in the form of a sheet.

6. Method according to any of the previous claims, wherein, wherein said thermoplastic composite is cooled after opening the mould, preferably by cooling the mould.

7. Method according to claim 6, wherein said cooling is carried out using water.

8. Method according to any of the previous claims, wherein in step ii) a pressure is applied, said pressure being more than 1 bar, preferably 2 to 20 bars, and more preferably 10 bars.

9. Method according to any of the previous claims, wherein said dwell time is between 10 seconds to 4 hours, preferably between 1 minute to 2 hours, and more preferably between 5 minutes to 1 hour.

10. Method according to any of the previous claims, wherein said semi-crystalline polymer is a polyolefin, preferably polypropylene.

11. Method according to any of the previous claims, wherein the reinforcement accounts for more than 70 vol.% of the composite.

12. Method according to any of the previous claims, wherein the thermoplastic composite is a cloth, tape or yarn, the core of which forms said reinforcement, on which core at least one skin layer is present which forms said matrix.

13. Method according to any of the previous claims, wherein the temperature of said mould is controlled by applying electromagnetic fields to an intermediate element.

14. Method according to any of the previous claims for the preparation of 3-dimensional objects.

15. Method according to any of claims 1-9 for the preparation of single curvature parts or sheets.

## Patentansprüche

1. Verfahren zum Thermoformen eines thermoplastischen Verbundstoffs, der eine Matrix und eine Verstärkung umfasst, die beide von einem halbkristallinen Polymer derselben Kasse ausgehen, wobei das Verfahren die Schritte umfasst:
i) Anordnen eines Stapels thermoplastischen Verbundstoffs, dessen Temperatur unterhalb des Schmelzpunkts der Matrix liegt, in einer Form, deren Temperatur zwischen dem Siegel- oder Schmelzpunkt der Matrix und dem Schmelzpunkt der Verstärkung liegt;
ii) Schließen der Form und
iii) Öffnen der Form nach einer Standzeit,
wobei die Temperatur der Form nach Schritt ii) zumindest eine Zeit lang zwischen dem Siegelpunkt der Matrix und dem Schmelzpunkt der Verstärkung liegt.

2. Verfahren nach Anspruch 1, wobei die Temperatur des thermoplastischen Verbundstoffs in Schritt i) unterhalt des Siegelpunkts der Matrix biegt.

3. Verfahren nach Anspruch 1 oder 2, wobei die Temperatur der Form zwischen dem Schmelzpunkt der Matrix und dem Schmelzpunkt der Verstärkung liegt.

4. Verfahren nach einem der vorhergehenden Ansprüche, wobei der Verbundstoff aus Verbundstoffen ausgewählt wird, bei denen der DSC-Schmelzpunkt der Matrix niedriger ist als der DSC-Schmelzpunkt der Verstärkung, und aus Verbundstoffen, bei denen der DSC-Schmeizpunkt der Matrix der bleiche ist wie der C3Siü-Schmetzpunkt der Verstärkung.

5. Verfahren nach einem der vorhergehenden Anspruche, wobei der Stapel in Form einer Platte vorliegt.

6. Verfahren nach einem der vorhergehenden Ansprüche, wobei der thermoplastische Verbundstoff nach dem Öffnen der Form gekühlt wird, vorzugsweise durch das Kühlen der Form.

7. Verfahren nach Anspruch 6, wobei die Kühlung unter Einsatz von Wasser erfolg.

8. Verfahren nach einem der vorhergehenden Ansprüche, wobei in Schritt ii) ein Druck ausgeübt wird, der höher als 1 bar ist und vorzugsweise 2 bis 20 bar und höchst vorzugsweise 10 bar beträgt.

9. Verfahren nach einem der vorhergehenden Ansprüche, wobei die Standzeit zwischen 10 Sekunden und 4 Stunden beträgt, vorzugsweise zwischen 1 Minute und 2 Stunden und höchst vorzugsweise zwischen 5 Minuten und 1 Stunde.

10. Verfahren nach einem der vorhergehenden Ansprüche, wobei das semikristalline Polymer ein Polyolefin ist, vorzugsweise Polypropylen.

11. Verfahren nach einem der vorhergehenden Ansprüche, wobei die Verstärkung mehr als 70 Vor.-% des Verbundstoffs ausmacht.

12. Verfahren nach einem der vorhergehenden Ansprüche, wobei der thermoplastische Verbundstoff ein Tuch, Band oder Garn ist, dessen Kern die Verstärkung bildet, wobei auf dem Kern zumindest eine Außenschicht vorhanden ist, die die Matrix bildet.

13. Verfahren nach einem der vorhergehenden Ansprüche, wobei die Temperatur der Form durch das Anlegen von elektromagnetischen Feldern an einem Zwischenelement gesteuert wird.

14. Verfahren nach einem der vorhergehenden Ansprüche für die Herstellung von dreidimensionalen Objekten.

15. Verfahren nach einem der Ansprüche 1 bis 9 für die Herstellung von Einzelkrümmungsteilen oder-platten.

## Revendications

1. Procédé de thermoformage d'un composite plastique, lequel composite comprend une matrice et un renfort, tous deux issus d'un polymère semi-cristallin de la même classe, comprenant les étapes consistant à :
i) positionner une pile dudit composite thermoplastique, ayant une température inférieure au point de fusion de ladite matrice, dans un moule ayant une température entre le point de collage ou de scellage ou de fusion de ladite matrice et le point de fusion dudit renfort,
ii) fermer ledit moule, et
iii) ouvrir le moule après un temps de maintien,
dans lequel la température dudit moule se situe entre le point de collage de ladite matrice et le point de fusion dudit renfort, au moins pendant un intervalle de temps après l'étape ii).

2. Procédé selon la revendication 1, dans lequel la température dudit composite thermoplastique à l'étape i) se situe en dessous du point de collage de ladite matrice.

3. Procédé selon la revendication 1 ou 2, dans lequel la température dudit moule se situe entre le point de fusion de ladite matrice et le point de fusion dudit renfort.

4. Procédé selon l'une quelconque des revendications précédentes, dans lequel le composite est sélectionné parmi des composites où le point de fusion DSC de la matrice est inférieur au point de fusion DSC du renfort, et des composites où le point de fusion DSC de la matrice est égal au point de fusion DSC du renfort.

5. Procédé selon l'une quelconque des revendications précédentes, dans lequel ladite pile se présente sous la forme d'une feuille.

6. Procédé selon l'une quelconque des revendications précédentes, dans lequel ledit composite thermoplastique est refroidi après l'ouverture du moule, de préférence en refroidissant le moule.

7. Procédé selon la revendication 6, dans lequel ledit refroidissement est exécuté en utilisant de l'eau.

8. Procédé selon l'une quelconque des revendications précédentes, dans lequel à l'étape ii) une pression est appliquée, ladite pression étant supérieure à 1 bar, de préférence de 2 à 20 bars, et de façon davantage préférée de 10 bars.

9. Procédé selon l'une quelconque des revendications précédentes, dans lequel ledit temps de maintien se situe entre 10 secondes et 4 heures, de préférence entre 1 minute et 2 heures, et de façon davantage préférée entre 5 minutes et 1 heure.

10. Procédé selon l'une quelconque des revendications précédentes, dans lequel ledit polymère semi-cristallin est une polyoléfine, de préférence du polypropylène.

11. Procédé selon l'une quelconque des revendications précédentes, dans lequel le renfort compte plus de 70 % en volume du composite.

12. Procédé selon l'une quelconque des revendications précédentes, dans lequel le composite thermoplastique est un tissu, un ruban ou un fil, dont le noyau forme ledit renfort, sur lequel noyau au moins une couche de peau est présente, laquelle forme ladite matrice.

13. Procédé selon l'une quelconque des revendications précédentes, dans lequel la température dudit moule est régulée par l'application de champs électromagnétiques sur un élément intermédiaire.

14. Procédé selon l'une quelconque des revendications précédentes pour la préparation d'objets ayant 3 dimensions.

15. Procédé selon l'une quelconque des revendications 1 à 9 pour la préparation de parties ou de feuilles à simple courbure.
